# EUROPÄISCHE PATENTANMELDUNG

(11) **EP 3 846 395 A1**
(43) Veröffentlichungstag der Anmeldung: **07.07.2021**
(21) Anmeldenummer: 19219967.7
(22) Anmeldetag: 30.12.2019
(51) Int. Cl.: H04L 12/735, H04L 12/761, H04L 12/707, H04L 12/913, H04L 12/911, H04L 12/915, H04L 12/927

(54) **VERFAHREN ZUR REDUNDANTEN ÜBERMITTLUNG VON DATENSTRÖMEN IN EINEM KOMMUNIKATIONSNETZ, NETZINFRASTRUKTURGERÄT UND KOMMUNIKATIONSENDGERÄT**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Schmitt, Jürgen, 90766 Fürth (DE)

(57) **Zusammenfassung**

Zur redundanten Übermittlung von Datenströmen in einem Kommunikationsnetz senden Kommunikationsendgeräte an Anfangsknoten zur Reservierung von durch Netzinfrastrukturgeräte an Zwischenknoten bereitzustellenden Ressourcen erste Nachrichten senden, in denen jeweils Dienstgüteparameter für die Datenströme und Netz-Identifikatoren von zur redundanten Übermittlung der Datenströme zu nutzenden virtuellen lokalen Netze spezifiziert sind. Kommunikationsendgeräte an Endknoten senden für eine Reservierungsanfrage zweite Nachrichten, in denen jeweils ein Datenstrom-Identifikator spezifiziert ist. Netzinfrastrukturgeräte an Verzweigungsknoten teilen die ersten Nachrichten in Bezug auf die in ihnen spezifizierten Netz-Identifikatoren auf und leiten diese nur innerhalb des jeweiligen virtuellen lokalen Netzes weiter. Netzinfrastrukturgeräte an Vereinigungsknoten fassen die ersten Nachrichten in Bezug auf die in ihnen spezifizierten Netz-Identifikatoren zusammen und leiten diese zusammengefasst weiter.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Aus US 9 673 995 B2 ist bekannt, dass zur redundanten Nachrichtenübermittlung in einem industriellen Kommunikationsnetz mit einer beliebig vermaschten Netztopologie für eine zumindest abschnittsweise redundante Kommunikationsverbindung zwischen zwei Netzknoten innerhalb des industriellen Kommunikationsnetzes voneinander unabhängige Pfade ermittelt werden. Dabei umfassen die voneinander unabhängigen Pfade separate Netzknoten eines einzelnen Kommunikationsnetzes. Nachrichten mit Duplikateidentifikatoren werden entsprechend zu den ermittelten Pfaden korrespondierenden Weiterleitungsregeln zwischen Sende- und Empfangseinheiten von Kommunikationsgeräten des industriellen Kommunikationsnetzes ausgetauscht.

EP 3 035 606 A1 betrifft ein Verfahren zur Datenübermittlung in einem zumindest 2 virtuelle lokale Netze umfassenden Kommunikationsnetz, bei dem Datenströmen jeweils eine Datenstrom-individuelle Ziel-Gerätekennung zugeordnet wird. Bei einer Übermittlung eines Datenstroms von einem Quell-Kommunikationsgerät, das einem ersten virtuellen lokalen Netz zugeordnet ist, an ein Ziel-Kommunikationsgerät, das einem zweiten lokalen Netz zugeordnet ist, wird ein dem Datenstrom innerhalb des ersten virtuellen lokalen Netzes zugeordneter Identifikator in einen dem Datenstrom innerhalb des zweiten virtuellen lokalen Netzes zugeordneten Identifikator umgewandelt.

In WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressoucenreservierung vorgenommen.

Aus WO 2019/001828 A1 ist ein Verfahren zur Nachrichtenübermittlung in einem redundant betreibbaren industriellen Kommunikationsnetz bekannt, das innerhalb einer Ringtopologie miteinander verbundene Kommunikationsgeräte umfasst. Dabei detektiert eine aktivierte Überwachungs- und Steuerungseinheit eines ausgewählten Kommunikationsgeräts eine Unterbrechung innerhalb der Ringtopologie anhand durch das ausgewählte Kommunikationsgerät versendeter und wieder empfangener Test-Nachrichten. In Abhängigkeit von einer detektierten Unterbrechung wird eine Weiterleitung von Nachrichten mit Nutzdaten zwischen den Ring-Anschlüssen des ausgewählten Kommunikationsgeräts gesteuert. Für redundante Kommunikationsverbindungen zwischen zwei Kommunikationsgeräten innerhalb der Ringtopologie werden jeweils zwei disjunkte Pfade ermittelt. Durch die Überwachungs- und Steuerungseinheit des ausgewählten Kommunikationsgeräts wird jeweils genau eine Kommunikationsverbindung zwischen zwei Kommunikationsgeräten über einen der beiden disjunkten Pfade durchgeschaltet.

Der vorliegenden Erfindung liegt die Aufgabe zugrunde, ein Verfahren zur redundanten Übermittlung von Datenströmen in einem Kommunikationsnetz für zeitkritische Daten schaffen, das eine Nutzung beliebig vieler disjunkter Pfade ermöglicht, und geeignete Vorrichtungen zur Durchführung des Verfahrens anzugeben.

Diese Aufgabe wird erfindungsgemäß durch ein Verfahren mit den in Anspruch 1 angegebenen Merkmalen, durch ein Netzinfrastrukturgerät mit den in Anspruch 15 angegebenen Merkmalen und durch ein Kommunikationsendgerät mit den in Anspruch 16 angegebenen Merkmalen gelöst. Vorteilhafte Weiterbildungen sind in den abhängigen Ansprüchen angegeben.

Zur redundanten Übermittlung von Datenströmen in einem Kommunikationsnetz, das Kommunikationsendgeräte an Anfangs- bzw. Endknoten von Pfaden für Datenströme, Netzinfrastrukturgeräte an Zwischenknoten und mehrere virtuelle lokale Netze mit zumindest abschnittsweise disjunkten Pfaden umfasst, senden die Kommunikationsendgeräte an den Anfangsknoten zur Reservierung von durch die Netzinfrastrukturgeräte an den Zwischenknoten bereitzustellenden Ressourcen erfindungsgemäß erste Nachrichten. In diesen ersten Nachrichten sind jeweils Dienstgüteparameter für die Datenströme und Netz-Identifikatoren der zur redundanten Übermittlung der Datenströme zu nutzenden virtuellen lokalen Netze spezifiziert. Die Kommunikationsendgeräte an den Endknoten für eine Reservierungsanfrage senden zweite Nachrichten, in denen jeweils ein Datenstrom-Identifikator spezifiziert ist.

Erfindungsgemäß teilen Netzinfrastrukturgeräte an Verzweigungsknoten, an denen sich die unterschiedlichen virtuellen lokalen Netze zugeordneten Pfade verzweigen, die ersten Nachrichten in Bezug auf die in ihnen spezifizierten Netz-Identifikatoren auf und leiten diese nur innerhalb des jeweiligen virtuellen lokalen Netzes weiter. Netzinfrastrukturgeräte an Vereinigungsknoten, an denen sich die unterschiedlichen virtuellen lokalen Netze zugeordneten Pfade vereinigen, fassen die ersten Nachrichten in Bezug auf die in ihnen spezifizierten Netz-Identifikatoren zusammen und leiten diese zusammengefasst weiter. Darüber hinaus überprüfen die Netzinfrastrukturgeräte an den Zwischenknoten bei einer Reservierungsanfrage anhand der ersten und zweiten Nachrichten jeweils, ob in den Netzinfrastrukturgeräten entlang des jeweiligen Pfades ausreichende Ressourcen zur Datenübermittlung unter Einhaltung der spezifizierten Dienstgüteparameter verfügbar sind. Die Netzinfrastrukturgeräte an den Zwischenknoten reservieren nur dann die Ressourcen für die Übermittlung der Datenströme, wenn in zumindest zwei zur redundanten Übermittlung der Datenströme zu nutzenden virtuellen lokalen Netzen ausreichende Ressourcen verfügbar sind.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationsnetz und durch ein Talker-Kommunikationsgerät versendete Talker Advertisment Meldungen,
- Figur 2: das Kommunikationsnetz gemäß Figur 1 und durch ein Listener-Kommunikationsgerät versendete Listener Ready Meldungen,
- Figur 3: ein erstes virtuelles lokales Netz innerhalb des Kommunikationsnetzes gemäß Figur 1,
- Figur 4: ein zweites virtuelles lokales Netz innerhalb des Kommunikationsnetzes gemäß Figur 1,
- Figur 5: ein drittes virtuelles lokales Netz innerhalb des Kommunikationsnetzes gemäß Figur 1.

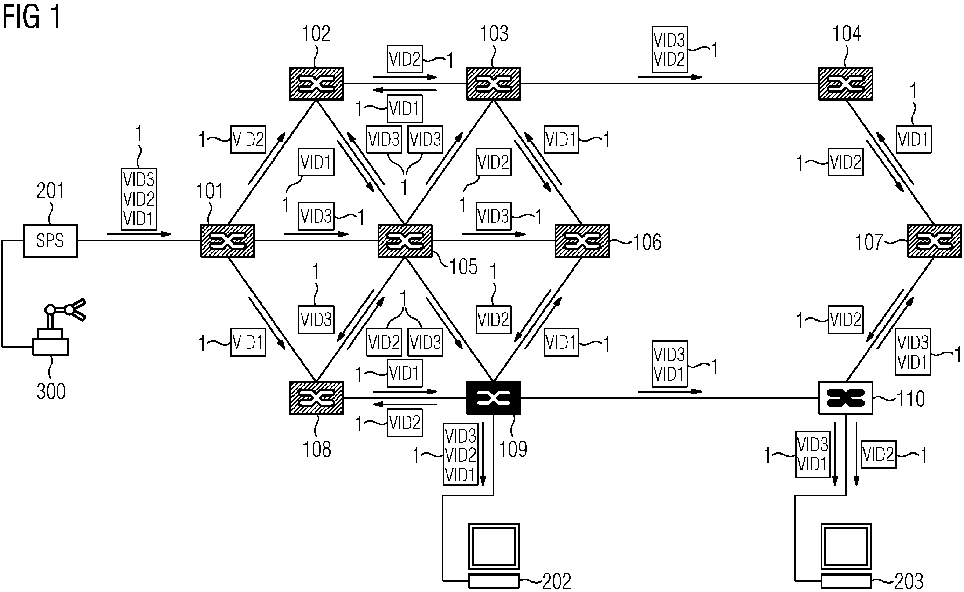

Das in Figur 1 dargestellte Kommunikationsnetz ist im vorliegenden Ausführungsbeispiel einem industriellen Automatisierungssystem zugeordnet und umfasst mehrere Netzinfrastrukturgeräte 101-110. Die Netzinfrastrukturgeräte 101-110 sind an Zwischenknoten des Kommunikationsnetzes angeordnet und können beispielsweise Bridges, Switches oder Router sein und zum Anschluss von speicherprogrammierbaren Steuerungen 201, Eingabe/Ausgabe-Einheiten (I/O-Module) oder Bedien- und Beobachtungsstationen 202, 203 des industriellen Automatisierungssystems dienen. Im vorliegenden Ausführungsbeispiel ist das die Netzinfrastrukturgeräte 101-110 umfassende Kommunikationsnetz als Time-sensitive Network ausgestaltet, insbesondere entsprechend IEEE 802.1Q, IEEE 802.1AB, IEEE 802.1AS, IEEE 802.1BA bzw. IEEE 802.1CB.

Speicherprogrammierbare Steuerungen 201 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul ist eine speicherprogrammierbare Steuerung 201 beispielsweise mit einem Switch oder Router oder zusätzlich mit einem Feldbus verbunden. Die Eingabe/AusgabeEinheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 300. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind im vorliegenden Ausführungsbeispiel über ein Rückwandbus-System miteinander verbunden.

Eine Bedien- und Beobachtungsstation 202, 203 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202, 203 zur Anzeige von Werten eines Regelungskreises und zur Veränderung von Regelungsparametern verwendet. Bedien- und Beobachtungsstationen 202, 203 umfassen zumindest eine graphische Benutzerschnittstelle, ein Eingabegerät, eine Prozessoreinheit und ein Kommunikationsmodul.

Mittels erster Automatisierungsgeräte, die an Angangsknoten angeordnete Kommunikationsendgeräte darstellen und eine Talker-Funktion haben, werden Informationen bzw. Dienste über Datenströme zur Nutzung an zweiten Automatisierungsgeräten bereitgestellt, die an Endknoten angeordnete Kommunikationsendgeräte darstellen und eine Listener-Funktion haben. Dabei umfassen Datenströme Sequenzen von Datagrammen, insbesondere Datenrahmen (Frames) oder Datenpakete. Ein Automatisierungsgerät kann gleichzeitig sowohl eine Talker-Funktion als auch eine Listener-Funktion haben, beispielsweise wenn es einerseits Automatisierungsdienste bereitstellt und andererseits Automatisierungsdienste anderer Geräte nutzt. Eine Weiterleitung der von den Datenströmen umfassten Datagramme kann insbesondere mittels Frame Preemption gemäß IEEE 802.1Qbu, Time-Aware Shaper gemäß IEEE 802.1Qbv, Credit-Based Shaper gemäß IEEE 802.1Qav, Burst Limiting Shaper, Peristaltic Shaper bzw. Priority-Based Shaper gesteuert werden.

Im vorliegenden Ausführungsbeispiel hat die speicherprogrammierbare Steuerung 201 eine Talker-Funktion, während die Bedien- und Beobachtungsstationen 202, 203 jeweils eine Listener-Funktion aufweisen und insbesondere durch die speicherprogrammierbare Steuerung 201 bereitgestellte Informationen empfangen. Grundsätzlich könnte die Bedien- und Beobachtungsstationen 202, 203 von der speicherprogrammierbaren Steuerung 201 empfangene Informationen analysieren und hieraus Steuerungsparameter für die speicherprogrammierbare Steuerung 201 vorgeben. Somit würden sowohl die speicherprogrammierbare Steuerung 201 als auch die Bedien- und Beobachtungsstationen 202, 203 beide Funktionen wahrnehmen. Aus diesem Grund werden Datenströme auf Reservierungsanfragen vorzugsweise jeweils bidirektional eingerichtet. Im Sinn einer vereinfachten Darstellung wird nachfolgend davon ausgegangen, dass die speicherprogrammierbare Steuerung 201 und die Bedien- und Beobachtungsstationen 202, 203 jeweils nur eine zugeordnete Funktion aufweisen.

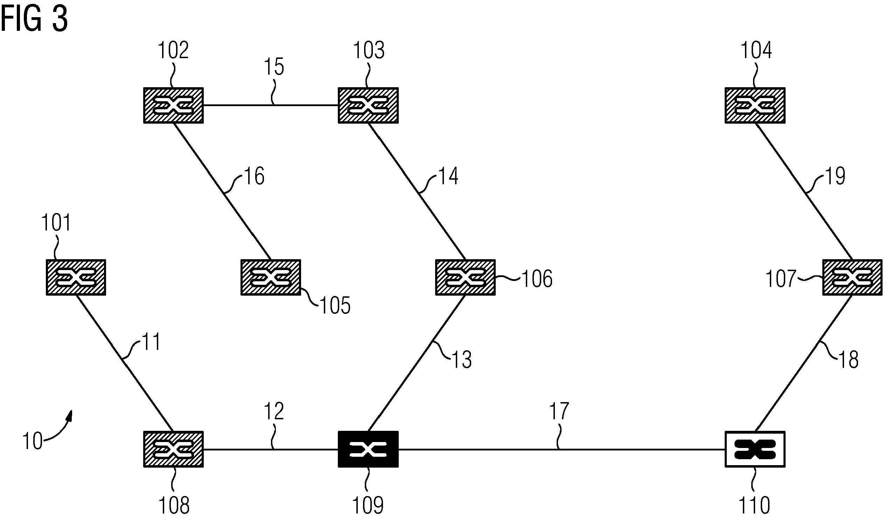

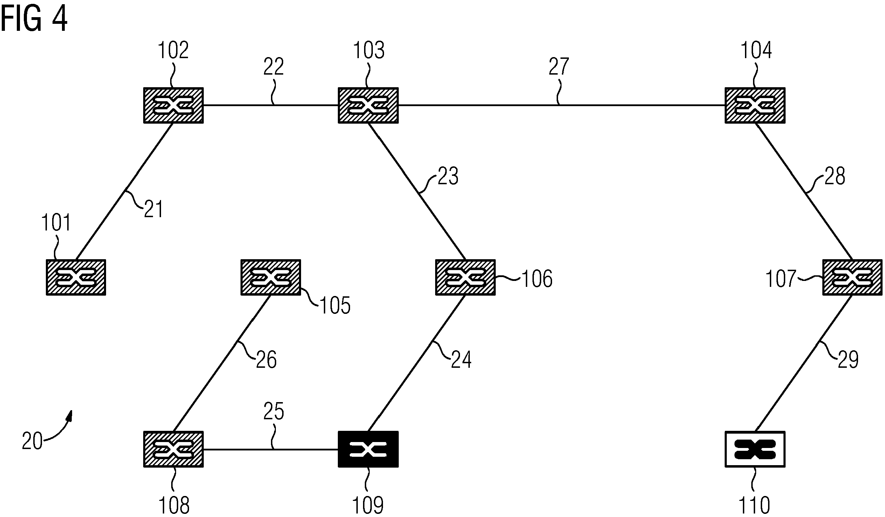

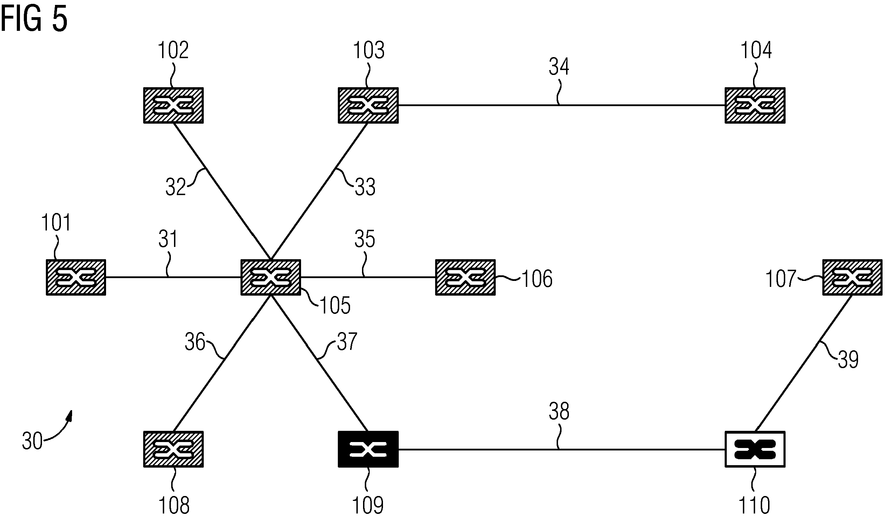

Zur redundanten Übermittlung von Datenströmen umfasst das Kommunikationsnetz im vorliegenden Ausführungsbeispiel ein erstes 10, zweites 20 und drittes 30 virtuelles lokales Netz (VLAN), denen jeweils ein VLAN-Identifikator VID1, VID2, VID3 zugeordnet ist. Die virtuellen lokalen Netze 10, 20, 30 sind jeweils in den Figuren 3 bis 5 dargestellt und weisen zumindest abschnittsweise disjunkte Knoten-zu-Knoten-Verbindungen 11-19, 21-29, 31-39 sowie jeweils eine schleifenfreie Baumtopologie auf. Eine solche Baumtopologie kann beispielsweise mittels bekannter Spanning Tree Algorithmen ermittelt werden. Dabei werden für die drei virtuellen lokalen Netze 10, 20, 30 jeweils unterschiedliche Wurzelknoten vorgegeben. Für das erste virtuelle lokale Netz 10 wird als Wurzelknoten beispielsweise der Zwischenknoten vorgegeben, an dem das Netzinfrastrukturgerät 109 angeordnet ist. Dagegen werden für das zweite 20 bzw. dritte virtuelle lokale Netz 30 als Wurzelknoten beispielsweise die Zwischenknoten vorgegeben, an denen die Netzinfrastrukturgeräte 103 bzw. 105 angeordnet sind.

Zur Reservierung von durch die Netzinfrastrukturgeräte 101-109 bereitzustellenden Ressourcen spezifiziert die speicherprogrammierbare Steuerung 201 als erstes Automatisierungsgerät im Rahmen einer Datenstrom-Anmeldung jeweils Dienstgüteparameter für den Datenstrom und die VLAN-Identifikatoren VID1, VID2, VID3 der zur redundanten Übermittlung des Datenstroms zu nutzenden virtuellen lokalen Netze 10, 20, 30. Die durch die Kommunikationsgeräte 101-103 bereitzustellenden Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges. Die spezifizierten Dienstgüteparameter und VLAN-Identifikatoren VID1, VID2, VID3 werden mittels Talker Advertisment Meldungen 1 an die Netzinfrastrukturgeräte 101-109 gesendet. Dabei werden die VLAN-Identifikatoren VID1, VID2, VID3 jeweils in einem VLAN-ID-Vektor zusammengefasst, der in die Talker Advertisment Meldungen 1 eingefügt wird.

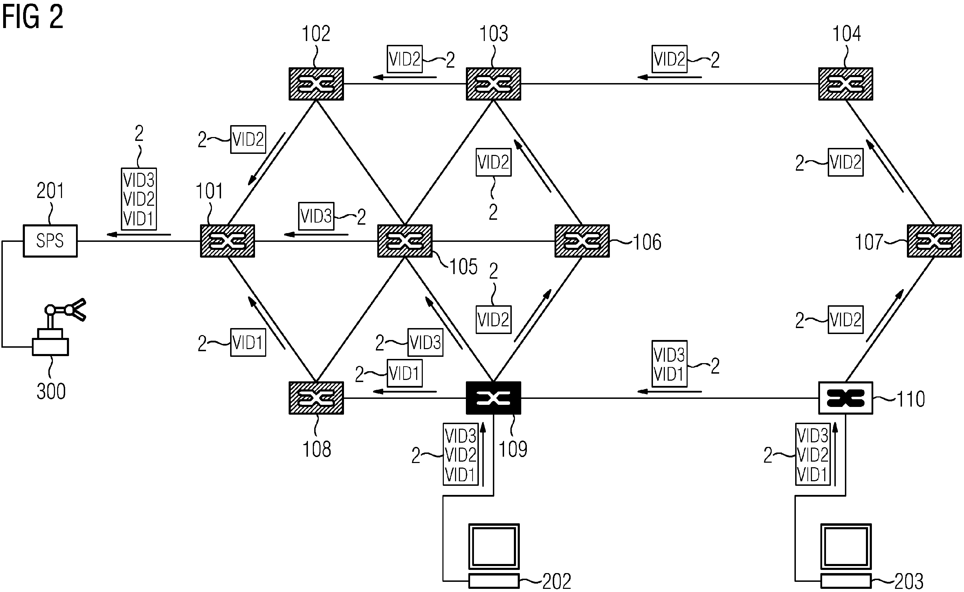

Bei erfolgreicher Datenstrom-Anmeldung bzw. grundsätzlicher Erfüllbarkeit spezifizierter Dienstgüte-Anforderungen erfolgt jeweils eine Zuordnung eines Datenstrom-Identifikators. Für eine Reservierungsanfrage spezifizieren die Bedien- und Beobachtungsstationen 202, 203 als zweite Automatisierungsgeräte den jeweiligen Datenstrom-Identifikator. Der spezifizierte Datenstrom-Identifikator wird entsprechend Figur 2 mittels Listener Ready Meldungen 2 an die an die Netzinfrastrukturgeräte 101-109 gesendet.

Netzinfrastrukturgeräte 101, an Verzweigungsknoten, an denen sich die unterschiedlichen virtuellen lokalen Netze 10, 20, 30 zugeordneten Pfade verzweigen, teilen die Talker Advertisment Meldungen 1 in Bezug auf die in ihnen spezifizierten VLAN-Identifikatoren VID1, VID2, VID3 auf und leiten diese nach ihrer Aufteilung nur innerhalb des jeweiligen virtuellen lokalen Netzes 10, 20, 30 weiterleiten.

Im vorliegenden Ausführungsbeispiel empfängt das Netzinfrastrukturgerät 101 von der speicherprogrammierbaren Steuerung 201 Talker Advertisment Meldungen 1 mit jeweils einem VLAN-ID-Vektor, der alle drei VLAN-Identifikatoren VID1, VID2, VID3 umfasst. Das Netzinfrastrukturgerät 101 teilt die empfangenen Talker Advertisment Meldungen 1 jeweils in drei Talker Advertisment Meldungen 1 auf, die jeweils einen VLAN-ID-Vektor mit nur einem VLAN-Identifikator VID1, VID2, VID3 umfassen. Daher leitet das Netzinfrastrukturgerät 101 eine Talker Advertisment Meldung 1 an das Netzinfrastrukturgerät 102 weiter, dessen einen VLAN-ID-Vektor nur den VLAN-Identifikator VID2 umfasst. Dementsprechend leitet das Netzinfrastrukturgerät 101 jeweils eine Talker Advertisment Meldung 1 an das Netzinfrastrukturgerät 105 bzw. 108 weiter, dessen VLAN-ID-Vektor nur den VLAN-Identifikator VID3 bzw. VID1 umfasst.

Netzinfrastrukturgeräte 103, 109 an Vereinigungsknoten, an denen sich die unterschiedlichen virtuellen lokalen Netze 10, 20, 30 zugeordneten Pfade vereinigen, fassen die Talker Advertisement Meldungen 1 in Bezug auf die in ihnen spezifizierten VLAN-Identifikatoren zusammen und leiten diese zusammengefasst weiter. Dies gilt jedoch nur für Netzinfrastrukturgeräte, die eine Duplikatefilter-Funktion aufweisen.

Zueinander redundante Datagramme werden durch eine gemeinsame Sequenznummer gekennzeichnet. Anhand dieser Sequenznummern können bereits korrekt empfangene Datagramme identifiziert und verworfen werden. Insbesondere werden redundant zu übermittelnde Datagramme jeweils durch die Kommunikationsendgeräte an den Anfangsknoten bzw. durch Netzinfrastrukturgeräte an Verzweigungsknoten vervielfältigt, die eine Multiplexer-Funktion aufweisen. Analog dazu werden bereits korrekt empfangene Datagramme durch die Kommunikationsendgeräte an den Endknoten bzw. durch Netzinfrastrukturgeräte an Vereinigungsknoten identifiziert und verworfen, die eine Duplikatefilter-Funktion aufweisen. Vorzugsweise werden zueinander redundante Datagramme entsprechend IEEE 802.1 CB behandelt.

Im vorliegenden Ausführungsbeispiel umfasst das Netzinfrastrukturgerät 110 keine Duplikatefilter-Funktion. Daher werden die beiden durch das Netzinfrastrukturgerät 110 empfangenen Talker Advertisement Meldungen 1, die einerseits einen VLAN-ID-Vektor mit den VLAN-Identifikatoren VID3 sowie VID1 und andererseits einen VLAN-ID-Vektor mit dem VLAN-Identifikator VID2 umfassen, nicht zusammengefasst, sondern separat an die Bedien- und Beobachtungsstation 203 weitergeleitet. Eine Duplikatefilterung erfolgt in diesem Fall durch die die Bedien- und Beobachtungsstation 203.

Im Gegensatz zum Netzinfrastrukturgerät 110 umfasst das Netzinfrastrukturgerät 109 im vorliegenden Ausführungsbeispiel eine Duplikatefilter-Funktion. Damit kann das das Netzinfrastrukturgerät 109 die von den Netzinfrastrukturgeräten 105, 106, 108 empfangenen Talker Advertisment Meldungen 1 zusammenfassen, die jeweils einen VLAN-ID-Vektor mit nur einem VLAN-Identifikator VID1, VID2 bzw. VID3 umfassen. Dementsprechend ist in die an die Bedien- und Beobachtungsstation 202 weitergeleitete zusammengefasste Talker Advertisment Meldung 1 ein VLAN-ID-Vektor eingefügt, der alle drei VLAN-Identifikatoren VID1, VID2, VID3 umfasst. Analog hierzu gilt dies auch für die vom Netzinfrastrukturgerät 103 an das Netzinfrastrukturgerät 104 weitergeleitete Talker Advertisment Meldung 1, die einen VLAN-ID-Vektor mit den VLAN-Identifikatoren VID2 und VID3 umfasst.

Entsprechend Figur 2 werden die Listener Ready Meldungen 2 über dieselben virtuellen lokalen Netze 10, 20, 30 und in umgekehrter Richtung über dieselben Pfade wie die empfangenen Talker Advertisment Meldungen 1 weitergeleitet. Auch in den Listener Ready Meldungen 2 werden die VLAN-Identifikatoren VID1, VID2, VID3 der zur redundanten Übermittlung der Datenströme zu nutzenden virtuellen lokalen Netze 10, 20, 30 spezifiziert. Insbesondere teilen die Netzinfrastrukturgeräte 109, 110 an Verzweigungsknoten, an denen sich die unterschiedlichen virtuellen lokalen Netze 10, 20, 30 zugeordneten Pfade in Übermittlungsrichtung der Listener Ready Meldungen 2 verzweigen, die Listener Ready Meldungen 2 in Bezug auf die in ihnen spezifizierten VLAN-Identifikatoren VID1, VID2, VID3 auf. Dementsprechend werden die aufgeteilten Listener Ready Meldungen 2 nur innerhalb des jeweiligen virtuellen lokalen Netzes 10, 20, 30 weitergeleitet. Analog dazu fassen die Netzinfrastrukturgeräte 101 an Vereinigungsknoten, an denen sich die unterschiedlichen virtuellen lokalen Netze 10, 20, 30 zugeordneten Pfade vereinigen, die Listener Ready Meldungen 2 in Bezug auf die in ihnen spezifizierten VLAN-Identifikatoren VID1, VID2, VID3 zusammen und leiten diese zusammengefasst weiter. Ebenso wie bei den Talker Advertisement Meldungen 1 werden die zur redundanten Übermittlung der Datenströme zu nutzenden virtuellen lokalen Netze 10, 20, 30 durch in die Listener Ready Meldungen 2 eingefügte VLAN-ID-Vektoren spezifiziert. Die VLAN-ID-Vektoren in den Listener Ready Meldungen 2 werden an Verzweigungsknoten aufgeteilt und an Vereinigungsknoten zusammengefasst.

Entsprechend einem dezentralen Ansatz zur Reservierung von Ressourcen zur Übermittlung von Datenströmen überprüft jedes Netzinfrastrukturgerät 101-110 entlang eines Pfads für einen Datenstrom anhand der Dienstgüteparameter bei einer Reservierungsanfrage jeweils, ob im jeweiligen Netzinfrastrukturgerät 101-110 ausreichende Ressourcen zur Datenübermittlung unter Einhaltung der spezifizierten Dienstgüteparameter verfügbar sind. Eine zentrale Instanz zur Ressourcenverwaltung oder Pfadermittlung ist mit dem dezentralen Ansatz zur Ressourcen-Reservierung für Datenströme nicht erforderlich.

Die Netzinfrastrukturgeräte 101-110 reservieren jedoch nur dann die Ressourcen für die Übermittlung der Datenströme, wenn in zumindest zwei zur redundanten Übermittlung der Datenströme zu nutzenden virtuellen lokalen Netzen 10, 20, 30 ausreichende Ressourcen verfügbar sind. In diesem Fall wird jeweils eine dem spezifizierten Datenstrom-Identifikator zugeordnete Datenstrom-Ziel-Adresse an ein anfragendes Kommunikationsendgerät 202, 203 an einem Endknoten übermittelt. Bei erfolgreicher Reservierungsanfrage ermitteln darüber hinaus Konfigurationssteuerungseinheiten der Netzinfrastrukturgeräte 101-110 entlang eines Pfads für einen Datenstrom jeweils Konfigurationsinformationen und richten das jeweilige Netzinfrastrukturgerät 101-110 entsprechend den ermittelten Konfigurationsinformationen zur Ressourcen-Bereitstellung für die Datenströme ein.

## Patentansprüche

1. Verfahren zur redundanten Übermittlung von Datenströmen in einem Kommunikationsnetz, bei dem
- das Kommunikationsnetz Kommunikationsendgeräte (201-203) an Anfangs- und/oder Endknoten von Pfaden für Datenströme und Netzinfrastrukturgeräte (101-110) an Zwischenknoten umfasst,
- das Kommunikationsnetz mehrere virtuelle lokale Netze (10, 20, 30) mit zumindest abschnittsweise disjunkten Pfaden (11-19; 21-29; 31-39) umfasst,
- die Kommunikationsendgeräte an den Anfangsknoten zur Reservierung von durch die Netzinfrastrukturgeräte an den Zwischenknoten bereitzustellenden Ressourcen erste Nachrichten (1) senden, in denen jeweils Dienstgüteparameter für die Datenströme und Netz-Identifikatoren (VID1, VID2, VID3) der zur redundanten Übermittlung der Datenströme zu nutzenden virtuellen lokalen Netze spezifiziert sind,
- die Kommunikationsendgeräte an den Endknoten für eine Reservierungsanfrage zweite Nachrichten (2) senden, in denen jeweils ein Datenstrom-Identifikator spezifiziert ist,
- Netzinfrastrukturgeräte (101) an Verzweigungsknoten, an denen sich die unterschiedlichen virtuellen lokalen Netze zugeordneten Pfade verzweigen, die ersten Nachrichten in Bezug auf die in ihnen spezifizierten Netz-Identifikatoren aufteilen und nur innerhalb des jeweiligen virtuellen lokalen Netzes weiterleiten,
- Netzinfrastrukturgeräte (109) an Vereinigungsknoten, an denen sich die unterschiedlichen virtuellen lokalen Netze zugeordneten Pfade vereinigen, die ersten Nachrichten in Bezug auf die in ihnen spezifizierten Netz-Identifikatoren zusammenfassen und zusammengefasst weiterleiten,
- die Netzinfrastrukturgeräte an den Zwischenknoten bei einer Reservierungsanfrage anhand der ersten und zweiten Nachrichten jeweils überprüfen, ob in den Netzinfrastrukturgeräten entlang des jeweiligen Pfades ausreichende Ressourcen zur Datenübermittlung unter Einhaltung der spezifizierten Dienstgüteparameter verfügbar sind,
- die Netzinfrastrukturgeräte an den Zwischenknoten nur dann die Ressourcen für die Übermittlung der Datenströme reservieren, wenn in zumindest zwei zur redundanten Übermittlung der Datenströme zu nutzenden virtuellen lokalen Netzen ausreichende Ressourcen verfügbar sind.

2. Verfahren nach Anspruch 1,
bei dem die Datenströme Sequenzen von Datagrammen umfassen, bei dem zueinander redundante Datagramme durch eine gemeinsame Sequenznummer gekennzeichnet werden und bei dem bereits korrekt empfangene Datagramme anhand der Sequenznummern identifiziert und verworfen werden.

3. Verfahren nach Anspruch 2,
bei dem redundant zu übermittelnde Datagramme jeweils durch die Kommunikationsendgeräte an den Anfangsknoten und/oder durch eine Multiplexer-Funktion aufweisende Netzinfrastrukturgeräte an Verzweigungsknoten vervielfältigt werden und bei dem bereits korrekt empfangene Datagramme durch die Kommunikationsendgeräte an den Endknoten und/oder durch eine Duplikatefilter-Funktion aufweisende Netzinfrastrukturgeräte an Vereinigungsknoten identifiziert und verworfen werden.

4. Verfahren nach einem der Ansprüche 2 oder 3,
bei dem zueinander redundante Datagramme entsprechend IEEE 802.1 CB behandelt werden.

5. Verfahren nach einem der Ansprüche 1 bis 4,
bei dem bei ausreichenden Ressourcen in zumindest zwei zur redundanten Übermittlung der Datenströme zu nutzenden virtuellen lokalen Netzen jeweils eine dem spezifizierten Datenstrom-Identifikator zugeordnete Datenstrom-Ziel-Adresse an ein anfragendes Kommunikationsendgerät an einem Endknoten übermittelt wird.

6. Verfahren nach einem der Ansprüche 1 bis 5,
bei dem die zweiten Nachrichten über dieselben virtuellen lokalen Netze und in umgekehrter Richtung über dieselben Pfade wie die ersten Nachrichten weitergeleitet werden und bei dem in den zweiten Nachrichten die Netz-Identifikatoren der zur redundanten Übermittlung der Datenströme zu nutzenden virtuellen lokalen Netze spezifiziert sind.

7. Verfahren nach Anspruch 6,
bei dem die Netzinfrastrukturgeräte an Verzweigungsknoten, an denen sich die unterschiedlichen virtuellen lokalen Netze zugeordneten Pfade verzweigen, die zweiten Nachrichten in Bezug auf die in ihnen spezifizierten Netz-Identifikatoren aufteilen und nur innerhalb des jeweiligen virtuellen lokalen Netzes weiterleiten und bei dem die Netzinfrastrukturgeräte an Vereinigungsknoten, an denen sich die unterschiedlichen virtuellen lokalen Netze zugeordneten Pfade vereinigen, die zweiten Nachrichten in Bezug auf die in ihnen spezifizierten Netz-Identifikatoren zusammenfassen und zusammengefasst weiterleiten,

8. Verfahren nach einem der Ansprüche 6 oder 7,
bei dem die zur redundanten Übermittlung der Datenströme zu nutzenden virtuellen lokalen Netze durch in die ersten und/oder zweiten Nachrichten eingefügte Vektoren, welche die jeweiligen Netz-Identifikatoren umfassen, spezifiziert werden, bei dem die Vektoren in den ersten und/oder zweiten Nachrichten an Verzweigungsknoten aufgeteilt werden und bei dem die Vektoren in den ersten und/oder zweiten Nachrichten an Vereinigungsknoten zusammengefasst werden.

9. Verfahren nach einem der Ansprüche 1 bis 8,
bei dem die ersten Nachrichten Talker Advertisment Meldungen sind und bei dem die zweiten Nachrichten Listener Ready Meldungen sind.

10. Verfahren nach einem der Ansprüche 1 bis 9,
bei dem die durch die Netzinfrastrukturgeräte bereitzustellenden Ressourcen nutzbare Übertragungszeitfenster, Bandbreite, zugesicherte maximale Latenz, Queue-Anzahl, Queue-Cache und/oder Adress-Cache in Switches oder Bridges umfassen.

11. Verfahren nach einem der Ansprüche 1 bis 9,
bei dem die Netzinfrastrukturgeräte innerhalb eines Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, miteinander verbunden sind.

12. Verfahren nach Anspruch 10,
bei dem eine Weiterleitung der von den Datenströmen umfassten Datagramme mittels Frame Preemption, insbesondere gemäß IEEE 802.1Q-2018, Time-Aware Shaper, insbesondere gemäß IEEE 802.1Q-2018, Credit-Based Shaper, insbesondere gemäß IEEE 802.1Q-2018, Burst Limiting Shaper, Peristaltic Shaper und/oder Priority-Based Shaper gesteuert wird.

13. Verfahren nach einem der Ansprüche 1 bis 12,
bei dem die Datenströme auf Reservierungsanfragen jeweils bidirektional eingerichtet werden.

14. Verfahren nach einem der Ansprüche 1 bis 13,
bei dem die Netzinfrastrukturgeräte Bridges oder Switches sind.

15. Netzinfrastrukturgerät zur Durchführung eines Verfahrens nach einem der Ansprüche 1 bis 14, wobei das Netzinfrastrukturgerät dafür ausgestaltet und eingerichtet ist,
- als Netzinfrastrukturgerät an einem Verzweigungsknoten, an denen sich zumindest abschnittsweise disjunkte Pfade verzweigen, die zur redundanten Übermittlung von Datenströmen zu nutzenden virtuellen lokalen Netze zugeordnet sind, erste Nachrichten von Kommunikationsendgeräten an Anfangsknoten der Pfade in Bezug auf in ihnen spezifizierten Netz-Identifikatoren aufzuteilen und nur innerhalb des jeweiligen virtuellen lokalen Netzes weiterzuleiten, wobei in den ersten Nachrichten zur Reservierung von durch Netzinfrastrukturgeräte an Zwischenknoten bereitzustellenden Ressourcen jeweils Dienstgüteparameter für die Datenströme und Netz-Identifikatoren der zur redundanten Übermittlung der Datenströme zu nutzenden virtuellen lokalen Netze spezifiziert sind,
- als Netzinfrastrukturgerät an einem Vereinigungsknoten, an denen sich Pfade vereinigen, die unterschiedlichen virtuellen lokalen Netzen zugeordnet sind, die ersten Nachrichten in Bezug auf die in ihnen spezifizierten Netz-Identifikatoren zusammenzufassen und zusammengefasst weiterzuleiten,
- bei einer Reservierungsanfrage anhand der ersten und anhand zweiter Nachrichten jeweils zu überprüfen, ob im Netzinfrastrukturgerät ausreichende Ressourcen zur Datenübermittlung unter Einhaltung der spezifizierten Dienstgüteparameter verfügbar sind, wobei in den zweiten Nachrichten für Reservierungsanfragen jeweils ein Datenstrom-Identifikator spezifiziert ist,
- nur dann die Ressourcen für die Übermittlung der Datenströme zu reservieren, wenn in zumindest zwei zur redundanten Übermittlung der Datenströme zu nutzenden virtuellen lokalen Netzen ausreichende Ressourcen verfügbar sind.

16. Kommunikationsendgerät zur Durchführung eines Verfahrens nach einem der Ansprüche 1 bis 14, wobei das Kommunikationsendgerät dafür ausgestaltet und eingerichtet ist,
- als Kommunikationsendgerät an einem Anfangsknoten, an dem zumindest abschnittsweise disjunkte Pfade zur redundanten Übermittlung von Datenströmen anfangen, zur Reservierung von durch Netzinfrastrukturgeräte an Zwischenknoten bereitzustellenden Ressourcen erste Nachrichten zu senden, in denen jeweils Dienstgüteparameter für die Datenströme und Netz-Identifikatoren der zur redundanten Übermittlung der Datenströme zu nutzenden virtuellen lokalen Netze spezifiziert sind,
- als Kommunikationsendgerät an einem Endknoten für eine Reservierungsanfrage zweite Nachrichten zu senden, in denen jeweils ein Datenstrom-Identifikator spezifiziert ist.
